# FASCICULE DE BREVET EUROPEEN

(11) **EP 2 903 865 B1**
(45) Date de publication et mention de la délivrance du brevet: **16.11.2016**
(21) Numéro de dépôt: 13782737.4
(22) Date de dépôt: 24.09.2013
(51) Int. Cl.: B60R 16/037, B62D 1/181, B60N 2/02

(54) **SYSTEME DE GESTION D'UN VEHICULE ET SON PROCEDE ASSOCIE**
FAHRZEUGVERWALTUNGSSYSTEM UND ZUGEHÖRIGES VERFAHREN
VEHICLE MANAGEMENT SYSTEM AND ASSOCIATED METHOD

(30) Priorité: 02.10.2012 FR 1259304
(43) Date de publication de la demande: 12.08.2015
(73) Titulaire: Renault S.A.S., 92100 Boulogne-Billancourt (FR)
(72) Inventeur: JOST, Jérôme, F-78610 Le Perray En Yvelines (FR); UNG, Sam, F-78920 Ecquevilly (FR); NGUYEN, Hoang-Giang, F-91130 Ris-orangis (FR)
(86) Numéro de dépôt international: PCT/FR2013/052223
(87) Numéro de publication internationale: WO 2014/053737

(56) Documents cités:
- EP-A1- 2 228 270
- WO-A1-2004/074047
- WO-A2-2011/138558
- FR-A1- 2 893 883
- FR-A1- 2 954 922
- US-A1- 2003 218 532
- US-A1- 2012 086 249

## Description

L'invention se rapporte à un système de gestion d'un véhicule et à un procédé associé. Plus particulièrement, l'invention se rapporte à un système de gestion d'au moins un élément de véhicule par codage et décodage d'au moins un symbole, ainsi que le procédé associé. La gestion du véhicule s'applique à la gestion des différents profils utilisateurs du véhicule mais également à la gestion des données véhicule.

Il existe des dispositifs de clé d'accès à un véhicule permettant d'associer le paramétrage de différents éléments du véhicule à un profil utilisateur en fonction de la clé utilisée pour déverrouiller le véhicule, les valeurs des paramètres étant enregistrées dans un moyen de mémorisation localisé dans le véhicule. Ces dispositifs de clé d'accès peuvent comporter un transpondeur intégré dans la clé sur lequel sont enregistrées certaines informations propres au véhicule, qui sont lisibles sur un appareil dédié.

Ce système n'est pas satisfaisant car le profil utilisateur est associé à une clé d'un véhicule. De plus l'enregistrement d'informations propres au véhicule nécessite une gestion de la mémoire dans le transpondeur.

Le document FR-A1-2954922 divulgue un système de gestion d'un véhicule de transport en commun comportant une unité de contrôle reliée à un siège du véhicule par le réseau de bords dudit véhicule et à un lecteur optique de code barres transmettant le code barres à un moyen de décodage, l'unité de contrôle commandant l'élément du véhicule selon l'information associée au code barres.

L'inconvénient de ce document est qu'il ne permet pas d'enregistrer de l'information, que ce soit des informations liées à l'utilisateur ou au véhicule.

L'invention vise à obvier ces inconvénients en proposant un système de gestion d'un véhicule comportant une unité de contrôle reliée à au moins un élément du véhicule par un réseau dudit véhicule pour échanger au moins une information avec ledit élément. Le système de gestion comprend un générateur de symboles relié à l'unité de contrôle et qui édite un symbole associé à ladite information détenue par l'unité de contrôle.

L'invention peut comporter les caractéristiques techniques suivantes, prises isolément ou en combinaison :
- le symbole est interprétable par un moyen de décodage,
- l'information comporte au moins une valeur dudit élément du véhicule,
- le système comporte une interface homme machine reliée à l'unité de contrôle et l'unité de contrôle commande l'affichage d'au moins un message sur l'interface homme machine formulé pour déterminer si un utilisateur souhaite générer un nouveau symbole,
- le symbole est généré en fonction de valeurs renseignées par l'utilisateur,
- le générateur de symboles est déporté du véhicule.

L'invention porte également sur un procédé de gestion d'un véhicule comportant une unité de contrôle reliée à au moins un élément du véhicule par un réseau dudit véhicule. Ledit procédé comporte les étapes suivantes :
- une étape d'échange d'au moins une information entre l'unité de contrôle et ledit élément,
- une étape d'acquisition, par l'unité de contrôle, de l'information,
- une étape de génération d'au moins un symbole associé à ladite information acquise par l'unité de contrôle.

Selon une variante, le procédé peut comporter :
- une étape de détection d'événements enregistrés dans l'unité de contrôle, comportant :
   - une sous étape de mise en correspondance entre l'événement détecté avec une liste d'éléments dont l'information est destinée à être codée.

Selon un mode de réalisation particulier, le procédé peut comporter une étape d'affichage, sur une interface homme machine, d'au moins un message visant à demander à l'utilisateur s'il veut générer un symbole.

Selon un aspect complémentaire, le procédé peut comporter une étape d'acquisition de la réponse de l'utilisateur à l'étape d'affichage.

D'autres caractéristiques et avantages de l'invention apparaitront à la lecture de la description détaillée qui va suivre, donnée à titre d'exemple non limitatif. Pour sa compréhension, on se reportera aux dessins annexés dans lesquels :
- la figure 1 est une représentation schématique d'un mode de réalisation principal d'un système de gestion,
- la figure 2 est une représentation schématique d'une mise en oeuvre du système comportant des données sécurisées et non sécurisées,
- la figure 3 est une représentation schématique d'un mode de réalisation particulier du système, et
- la figure 4 est une représentation schématique d'un procédé de gestion d'un véhicule.

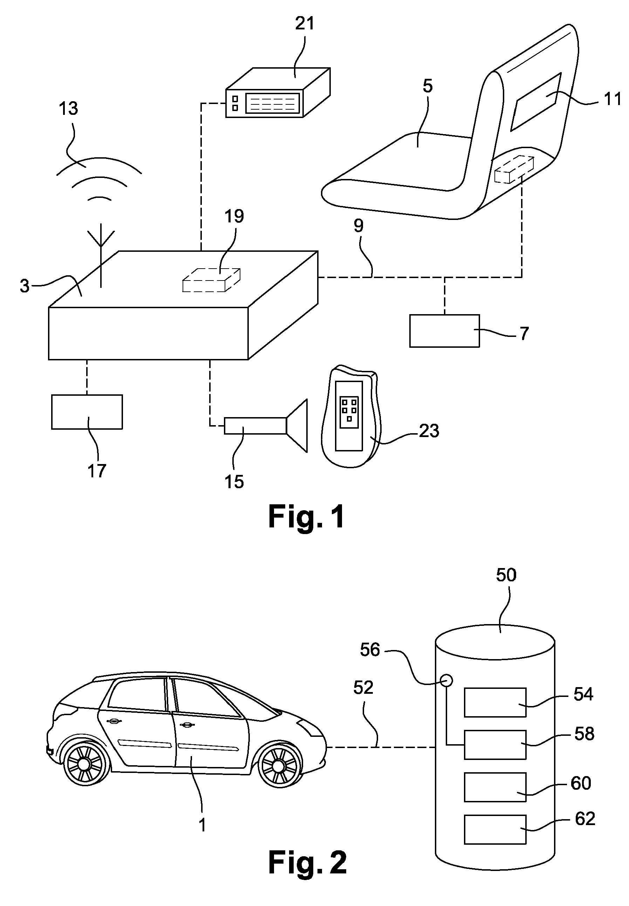

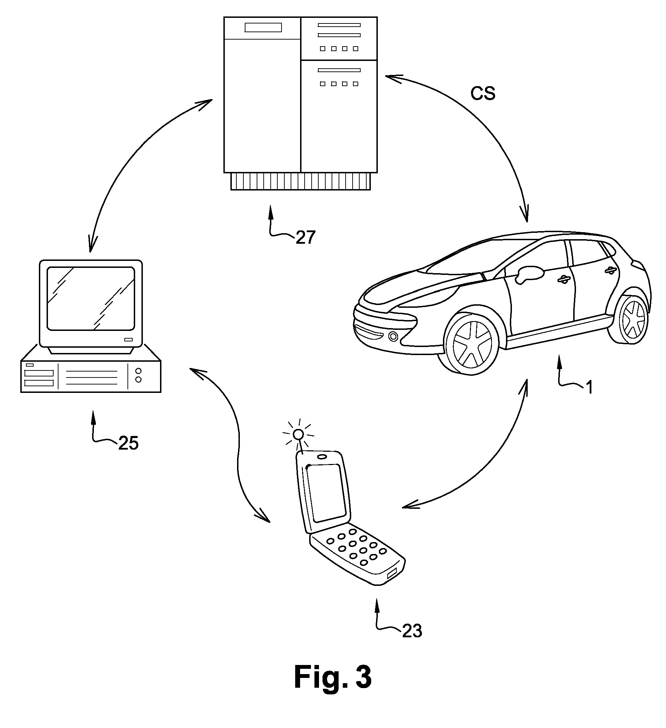

Un mode de réalisation de l'invention est représenté à la figure 1 dans laquelle un système de gestion d'un véhicule 1 (référence aux figures 2 et 3) comporte une unité de contrôle 3. L'unité de contrôle 3 est reliée à un siège 5 et à un compteur kilométrique 7 du véhicule par le réseau interne 9 du véhicule du type réseau CAN (Controller Area Network), et est également reliée à un écran 11 intégré dans le dossier du siège 5 par un réseau sans fil 13 du type réseau wifi ou bluetooth.

En outre, l'unité de contrôle 3 est reliée à un lecteur optique 15 de symboles, par l'exemple une caméra 15 située dans l'habitacle du véhicule. De manière particulièrement avantageuse, la caméra 15 peut être une caméra de surveillance de la vigilance du conducteur, ou toute autre caméra déjà présente dans l'habitacle du véhicule 1. Ainsi il est possible de limiter l'intégration de nouveaux moyens dans le véhicule et de réduire les coûts de mise en oeuvre de l'invention.

Les symboles comprennent toute représentation graphique lisible par un moyen d'acquisition d'image, comme par exemple et à titre non limitatif un code barres 1D type code 93, code 128 à longueur variable, un code barres 2D ou QR code (quick response code), un hologramme 2D ou 3D, un texte, une image, des caractères en braille, etc... Les symboles peuvent, également, comprendre les symboles sonores lisibles par un moyen d'acquisition sonore, type micro par exemple.

A titre d'exemple connu, un code barres de type code 93 permet de contenir 44 caractères alphanumériques. Un code barres de type code 128 permet de contenir 128 caractères. Un code barres à deux dimensions de type code QR version 40 de résolution 177x177 pixels peut contenir des données de type adresses web, textes jusqu'à 4296 caractères alphanumériques.

Le type de code barres choisi pour mettre en oeuvre l'invention est conditionné par la quantité d'information nécessaire à la mise en oeuvre de l'invention. Dans le cadre de l'exemple illustré un code barres du type QR version 10 (57x57 pixels pour 395 caractères alphanumériques) à été choisi.

Dans le mode de réalisation principal, la caméra 15 transmet un code barres à un moyen de décodage 17 relié à l'unité de contrôle 3. Le moyen de décodage 17 comporte au moins un algorithme apte à décoder le code barres, c'est-à-dire à retranscrire les différents points du code barres en données binaires. Par exemple un code barres 1D du type 93 permet de transmettre des données sur 64 bits, un QR code permet de transmettre des données sur 256 bits.

Le moyen de décodage 17 transmet l'information contenue dans le code barres à l'unité de contrôle 3 qui commande le siège 5 et l'écran 11 selon les informations contenues dans le code barres. Par exemple dans le mode de réalisation présenté, ces informations sont le réglage du siège 5 selon des données qui correspondent aux préférences d'un utilisateur, le chauffage du siège 5 et l'affichage de l'itinéraire sur l'écran 11.

Le système de gestion comprend un générateur 19 de symboles, par exemple un générateur 19 de codes barres, relié à l'unité de contrôle 3. Le générateur 19 de codes barres effectue le codage des informations en code barres, en d'autres termes le générateur 19 transcrit les données associées aux informations en un code barres.

Dans le mode de réalisation représenté à la figure 1, le générateur 19 est mis en oeuvre directement dans l'unité de contrôle 3 mais d'autres variantes sont possibles, un autre exemple sera donné ultérieurement dans la description. Le générateur 19 édite un code barres en fonction des valeurs du ou des paramètres de l'élément détenus par l'unité de contrôle 3, par exemple les valeurs des paramètres de réglage du siège 5 et de l'écran d'affichage 11.

Dans le mode de réalisation présenté, le code barres ainsi généré peut être affiché sur une interface homme machine 21, également appelée IHM 21, située dans la console centrale de la planche de bord (non représentée), ceci dans le but d'effectuer l'acquisition du code barres par un utilisateur, par exemple à l'aide d'un ordiphone 23 également appelé « smartphone », d'une tablette ou de tout autre équipement nomade équipé d'un appareil photo. De manière particulièrement avantageuse, l'IHM 21 pourra également être intégrée dans un écran existant du véhicule tel que l'écran de navigation ou le tableau de bord.

L'unité de contrôle 3 peut, également, commander l'affichage de messages sur l'IHM 21 formulés pour déterminer si l'utilisateur souhaite générer un nouveau code barres. L'unité de contrôle 3 peut ainsi commander l'affichage d'un message du type « voulez vous éditer un nouveau code barres correspondant aux dernières modifications ? » si l'utilisateur répond par l'affirmative alors l'unité de contrôle 3 envoi une commande au générateur 19 de codes barres afin qu'il édite un code barres intégrant les nouvelles données. Sinon, l'unité de contrôle 3 commande l'affichage d'une liste prédéfinie d'éléments du véhicule pour déterminer quelles informations l'utilisateur souhaite enregistrer sous forme de code barres, ou encore un affichage dans lequel l'utilisateur règle des valeurs lui-même, par exemple arrêter le chauffage du siège 5. Dans tous ces cas l'unité de contrôle commande au générateur 19 de codes barres d'éditer barres intégrant les différentes informations renseignées par l'utilisateur.

Selon un aspect particulier de l'invention représenté à la figure 1, l'unité de contrôle 3 est reliée au compteur kilométrique 7 du véhicule 1. Ainsi il est possible de générer un code barres contenant l'information du nombre de kilomètres du véhicule 1, par l'intermédiaire du générateur 19 de codes barres. De cette manière, il est possible de générer un ou plusieurs codes barres comportant des informations propres au véhicule 1 en vue d'un diagnostic ou d'un entretien du véhicule 1, en envoyant le ou les codes barres par message ou par courriel à partir de l'ordiphone 23. A titre d'illustration non représentée, les informations concernant les codes défaut (DTC), les états et les paramètres des différents calculateurs peuvent également être transmis par ce biais.

La liaison de l'unité de contrôle 3 au réseau CAN du véhicule est particulièrement avantageuse car l'unité de contrôle 3 a accès à l'ensemble des données du véhicule qui sont reliées au réseau CAN. L'unité de contrôle 3 peut ainsi faire l'acquisition de ces données en vue de les transmettre au générateur 19 de codes barres pour codage et afficher le code barres à destination de l'utilisateur.

Dans un mode de réalisation particulier de l'invention représenté à la figure 2, l'utilisateur peut régler les valeurs de différents éléments du véhicule depuis un ordinateur 25 en se connectant ou en envoyant les différentes valeurs des paramètres de l'élément à un serveur distant 27. Le serveur distant 27 est apte à coder les informations sous forme de code barres et à renvoyer le code barres ainsi généré sur l'ordinateur 25. L'utilisateur pourra transférer le code barres sur son ordiphone 23 afin de pouvoir l'utiliser ultérieurement. Par exemple l'utilisateur peut programmer son prochain itinéraire ainsi que les préférences d'itinéraires, pour le prochain usage du véhicule 1, ce qui est avantageux puisque l'utilisateur n'aura plus à saisir les données de destination dès lors que le code barres est présenté à la caméra 15.

Dans une première variante non représentée, l'utilisateur règle les valeurs depuis son ordiphone 23 connecté au serveur distant 27 et reçoit le code barres associé, de la même manière que dans l'exemple précédemment décrit.

Dans une deuxième variante non représentée, l'ordiphone 23 comporte une application qui contient un générateur de symboles, du type code barres, permettant de générer un code barres à partir d'informations renseignées dans l'application.

Selon un mode de réalisation particulier représenté à la figure 2, l'utilisateur peut acheter des services de la même manière que pour régler ses préférences, c'est-à-dire depuis son ordinateur 25 ou son ordiphone 23. Les achats sécurisés nécessitent quant à eux un échange de données cryptés pour des raisons évidentes de sécurité. Les techniques de cryptage sont connues de l'homme du métier, par exemple le cryptage symétrique ou encore le cryptage asymétrique.

Les services peuvent être de différentes natures, comme par exemple la réservation d'un hôtel, les frais de péage d'un futur itinéraire, une carte GPS, l'achat d'un album de musique, etc...

L'association d'achat de service en ligne et d'un symbole présente l'avantage de dématérialiser le support dans lequel le service est mis en oeuvre. Ainsi un utilisateur achète une unique fois une carte GPS de l'Europe, par exemple, et aura la possibilité de retrouver la carte GPS de l'Europe dans tous les véhicules équipés du système de gestion tel que présenté.

Selon un autre mode de réalisation, représenté à la figure 3, les éléments du système de gestion sont déportés du véhicule 1 dans une borne 50 reliée au véhicule 1 par réseau filaire 52 ou wifi. La borne 50 comporte une unité de contrôle 54, une caméra 56, un moyen de décodage 58, un générateur de codes barres 60 et l'IHM 62. Ces éléments sont analogues à ceux présentés précédemment, les références ont été changées afin de bien illustrer que le système peut comporter tout ou partie de ces éléments de manière embarquée ou débarquée selon le besoin.

Cette variante est avantageuse dans le cas d'une application de l'invention à un système d'autopartage. L'utilisateur peut réserver et payer son véhicule depuis son ordiphone 23 et présenter le code barres à la caméra 56 de la borne 50 au moment de la location du véhicule 1, et de faire l'acquisition d'un symbole associé aux coûts d'utilisation du véhicule à la fin de la location.

Selon un autre mode de réalisation non représenté, le moyen de décodage 17 peut être mis en oeuvre dans le calculateur de la caméra et le générateur 19 peut être mis en oeuvre dans l'IHM 21.

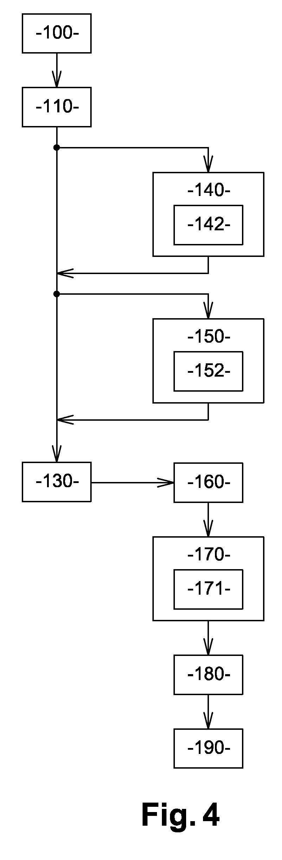

L'invention a, également, pour objet un procédé de gestion d'un véhicule 1 comportant le dispositif décrit ci-dessus. Comme représenté à la figure 4, ce procédé comporte les étapes suivantes :
- une étape 100 d'échange d'informations entre l'unité de contrôle 3 et l'un des éléments du véhicules, par exemple les valeurs de réglages du siège 5,
- une étape 110 d'acquisition, par l'unité de contrôle 3, de l'information,
- une étape 130 de génération, par le générateur 19 de codes barres, dudit code barres associé à ladite information acquise par l'unité de contrôle 3.

Comme représenté à la figure 4, le procédé peut comporter une d'étape 140 de détection d'événements enregistrés dans l'unité de contrôle 3, comme par exemple la détection de l'arrêt moteur et l'ouverture d'une porte. L'étape 140 comporte une sous étape 142 de correspondance entre l'événement détecté et une liste d'éléments dont l'information est destinée à être codée.

L'étape 140 permet d'associer un événement à la commande d'acquisition de la valeur de certains éléments du véhicule. Un autre exemple d'application est de détecter la combinaison de l'arrêt du moteur et de l'activation des feux de détresse afin de commander l'acquisition des valeurs propres du véhicule comme le nombre de kilomètres du véhicule, la valeur de la pression des pneus, le niveau de carburant dans le but de pouvoir commander la génération d'un code barres comportant toutes les information, automatiquement et rapidement, pour que l'utilisateur puisse le transmettre à un garage ou tout autre organisme apte à effectuer un diagnostic.

Le procédé peut, également, comporter une étape 150 de commande d'affichage, sur l'IHM 21 commandé par l'unité de contrôle 3, de messages visant à demander à l'utilisateur s'il veut générer un code barres. Toujours selon ce mode de réalisation, le procédé comporte une étape 152 d'acquisition de la réponse à l'étape 150, si la réponse à l'étape 150 est affirmative l'étape 130 de génération d'un code barres est mise en oeuvre.

Le code barres ainsi généré est interprétable par le moyen de décodage 17 relié à l'unité de contrôle 3 et à une caméra 15 selon les étapes ci-dessous :
- une étape 160 de lecture du code barres par la caméra 15,
- une étape 170 de transmission du code barres au moyen de décodage 17,
- une étape 171 de décodage du code barres par le moyen de décodage 17, cette étape permet de déterminer l'information associée au code barres,
- une étape 180 de transmission de l'information associée au code barres à l'unité de contrôle 3,
- une étape 190 de commande des éléments du véhicule en fonction de l'information associée au code barres,

L'invention ne se limite pas aux modes de réalisation présentés ci-dessus, l'invention peut s'appliquer à tout élément dès lors qu'il est relié à un réseau en lien avec l'unité de contrôle 3.

L'unité de contrôle pourra être un élément spécifique du véhicule ou pourra être fonctionnellement intégrée à un élément du véhicule assurant d'autre fonction (par exemple la BCM (body control module).

## Revendications

1. Système de gestion d'un véhicule (1) comportant une unité de contrôle (3, 54) reliée à au moins un élément (5, 7, 11) du véhicule (1) par un réseau (9, 13, 52) dudit véhicule (1) pour échanger au moins une information avec ledit élément (5, 7, 11), **caractérisé en ce qu'**il comprend un générateur (19, 27, 60) de symboles relié à l'unité de contrôle (3, 54) et **en ce que** le générateur (19, 27, 60) de symboles édite un symbole associé à ladite information détenue par l'unité de contrôle (3) étant une représentation graphique lisible par un moyen d'acquisition d'image.

2. Système de gestion selon la revendication 1, **caractérisé en ce que** le symbole est interprétable par un moyen de décodage (17, 58).

3. Système de gestion selon la revendication 2, **caractérisé en ce que** l'information comporte au moins une valeur dudit élément (5, 7, 11) du véhicule.

4. Système de gestion selon l'une des revendications 1 à 3, **caractérisé en ce qu'**il comporte une interface homme machine (21, 23, 25) reliée à l'unité de contrôle (3, 54) et **en ce que** l'unité de contrôle (3, 54) commande l'affichage d'au moins un message sur l'interface homme machine (21, 23, 25) formulé pour déterminer si un utilisateur souhaite générer un nouveau symbole.

5. Système de gestion selon la revendication 4, **caractérisé en ce que** le symbole est généré en fonction de valeurs renseignées par l'utilisateur.

6. Système de gestion selon l'une des revendications 1 à 5, **caractérisé en ce que** le générateur (19, 27, 60) de symboles est déporté du véhicule (1).

7. Procédé de gestion d'un véhicule comportant une unité de contrôle (3, 54) reliée à au moins un élément (5, 7, 11) du véhicule (1) par un réseau (13, 9, 52) dudit véhicule (1), ledit procédé comportant les étapes suivantes :
• une étape (100) d'échange d'au moins une information entre l'unité de contrôle (3, 54) et ledit élément (5, 7, 11),
• une étape (110) d'acquisition, par l'unité de contrôle (3), de l'information,
• une étape (130) de génération d'au moins un symbole associé à ladite information acquise par l'unité de contrôle (3) étant une représentation graphique lisible par un moyen d'acquisition d'image.

8. Procédé de gestion selon la revendication 7, **caractérisé en ce que** le procédé comporte :
• une étape (140) de détection d'événements enregistrés dans l'unité de contrôle (3, 54), comportant :
- une sous étape (142) de mise en correspondance entre l'événement détecté avec une liste d'éléments (5, 7, 11) dont l'information est destinée à être codée.

9. Procédé de gestion selon l'une des revendications 7 à 8, **caractérisé en ce que** le procédé comporte une étape (150) d'affichage, sur une interface homme machine (21), d'au moins un message visant à demander à l'utilisateur s'il veut générer un symbole.

10. Procédé de gestion selon la revendication 9, **caractérisé en ce qu'**il comporte une étape d'acquisition de la réponse de l'utilisateur à l'étape (150) d'affichage.

## Patentansprüche

1. Verwaltungssystem eines Fahrzeugs (1), umfassend eine Kontrolleinheit (3, 54), die mit mindestens einem Element (5, 7, 11) des Fahrzeugs (1) durch ein Netzwerk (9, 13, 52) des Fahrzeugs (1) verbunden ist, um mindestens eine Information mit dem Element (5, 7, 11) auszutauschen, **dadurch gekennzeichnet, dass** es einen Generator (19, 27, 60) von Symbolen umfasst, der mit der Kontrolleinheit (3, 54) verbunden ist, und dass der Generator (19, 27, 60) von Symbolen ein Symbol editiert, das der in der Kontrolleinheit (3) vorhandenen Information zugeordnet ist, wobei es eine grafische Darstellung ist, die von einem Bilderfassungsmittel lesbar ist.

2. Verwaltungssystem nach Anspruch 1, **dadurch gekennzeichnet, dass** das Symbol von einem Decodierungsmittel (17, 58) interpretierbar ist.

3. Verwaltungssystem nach Anspruch 2, **dadurch gekennzeichnet, dass** die Information mindestens einen Wert des Elements (5, 7, 11) des Fahrzeugs umfasst.

4. Verwaltungssystem nach einem der Ansprüche 1 bis 3, **dadurch gekennzeichnet, dass** es eine Mensch-Maschine-Schnittstelle (21, 23, 25) umfasst, die mit der Kontrolleinheit (3, 54) verbunden ist, und dass die Kontrolleinheit (3, 54) die Anzeige mindestens einer Meldung auf der Mensch-Maschine-Schnittstelle (21, 23, 25) steuert, die formuliert ist, um zu bestimmen, ob ein Benutzer ein neues Symbol erzeugen möchte.

5. Verwaltungssystem nach Anspruch 4, **dadurch gekennzeichnet, dass** das Symbol in Abhängigkeit von vom Benutzer mitgeteilten Werten erzeugt wird.

6. Verwaltungssystem nach einem der Ansprüche 1 bis 5, **dadurch gekennzeichnet, dass** der Generator (19, 27, 60) von Symbolen vom Fahrzeug (1) abgesetzt ist.

7. Verwaltungsverfahren eines Fahrzeugs, umfassend eine Kontrolleinheit (3, 54), die mit mindestens einem Element (5, 7, 11) des Fahrzeugs (1) durch ein Netzwerk (13, 9, 52) des Fahrzeugs (1) verbunden ist, wobei das Verfahren die folgenden Schritte umfasst:
- einen Schritt (100) des Austausches mindestens einer Information zwischen der Kontrolleinheit (3, 54) und dem Element (5, 7, 11),
- einen Schritt (110) der Erfassung der Information durch die Kontrolleinheit (3),
- einen Schritt (130) der Erzeugung mindestens eines Symbols, das der von der Kontrolleinheit (3) erfassten Information zugeordnet ist, wobei es eine grafische Darstellung ist, die von einem Bildererfassungsmittel lesbar ist.

8. Verwaltungsverfahren nach Anspruch 7, **dadurch gekennzeichnet, dass** das Verfahren umfasst:
- einen Schritt (140) der Erfassung von in der Kontrolleinheit (3, 54) aufgezeichneten Ereignissen, umfassend:
* einen Unterschritt (142) der Übereinstimmung zwischen dem erfassten Ereignis mit einer Liste von Elementen (5, 7, 11), deren Information dazu bestimmt ist, codiert zu werden.

9. Verwaltungsverfahren nach einem der Ansprüche 7 bis 8, **dadurch gekennzeichnet, dass** das Verfahren einen Schritt (150) der Anzeige auf einer Mensch-Maschine-Schnittstelle (21) mindestens einer Meldung, die den Benutzer fragen soll, ob er ein Symbol erzeugen will, umfasst.

10. Verwaltungsverfahren nach Anspruch 9, **dadurch gekennzeichnet, dass** es einen Schritt der Erfassung der Antwort des Benutzers im Anzeigeschritt (150) umfasst.

## Claims

1. Management system for a vehicle (1) including a control unit (3, 54) connected to at least one component (5, 7, 11) of the vehicle (1) via a network (9, 13, 52) of said vehicle (1) in order to exchange at least one item of information with said component (5, 7, 11), **characterized in that** it comprises a symbol generator (19, 27, 60) connected to the control unit (3, 54) and **in that** the symbol generator (19, 27, 60) issues a symbol associated with said information held by the control unit (3), being a graphical representation that can be read by an image acquisition means.

2. Management system according to Claim 1, **characterized in that** the symbol can be interpreted by a decoding means (17, 58).

3. Management system according to Claim 2, **characterized in that** the information includes at least one value of said component (5, 7, 11) of the vehicle.

4. Management system according to one of Claims 1 to 3, **characterized in that** it includes a man-machine interface (21, 23, 25) connected to the control unit (3, 54) and **in that** the control unit (3, 54) commands the display of at least one message on the man-machine interface (21, 23, 25), which message is formulated to determine whether a user wishes to generate a new symbol.

5. Management system according to Claim 4, **characterized in that** the symbol is generated according to values supplied by the user.

6. Management system according to one of Claims 1 to 5, **characterized in that** the symbol generator (19, 27, 60) is displaced from the vehicle (1).

7. Management method for a vehicle including a control unit (3, 54) connected to at least one component (5, 7, 11) of the vehicle (1) via a network (13, 9, 52) of said vehicle (1), said method including the following steps:
• a step (100) for the exchange of at least one item of information between the control unit (3, 54) and said component (5, 7, 11),
• a step (110) for the acquisition of the information by the control unit (3),
• a step (130) for the generation of at least one symbol associated with said information acquired by the control unit (3), being a graphical representation that can be read by an image acquisition means.

8. Management method according to Claim 7, **characterized in that** the method includes:
• a step (140) for detecting events recorded in the control unit (3, 54), including:
- a sub-step (142) for placing the detected event in correspondence with a list of components (5, 7, 11), the information of which is intended to be encoded.

9. Management method according to either of Claims 7 and 8, **characterized in that** the method includes a step (150) for displaying, on a man-machine interface (21), at least one message aiming to ask the user whether he/she wishes to generate a symbol.

10. Management method according to Claim 9, **characterized in that** it includes a step for acquiring the response of the user to the display step (150).
